# EUROPÄISCHE PATENTSCHRIFT

(11) **EP 2 722 504 B1**
(45) Veröffentlichungstag und Bekanntmachung des Hinweises auf die Patenterteilung: **10.05.2017**
(21) Anmeldenummer: 13003824.3
(22) Anmeldetag: 01.08.2013
(51) Int. Cl.: F01N 3/20

(54) **Reduktionsmitteldosiersystem mit doppelwandiger Förderleitung**
Reduction agent dosing system with a double-walled conveyor line
Système de dosage d'agent de réduction avec un conduit de transport à double paroi

(30) Priorität: 16.10.2012 DE 102012020207
(43) Veröffentlichungstag der Anmeldung: 23.04.2014
(73) Patentinhaber: Albonair GmbH, 44263 Dortmund (DE)
(72) Erfinder: Werner, Overhoff, 45772 Marl (DE); Hüthwohl, Georg, 59494 Soest (DE)
(74) Vertreter: Patentanwaltskanzlei Methling

(56) Entgegenhaltungen:
- EP-A1- 0 558 452
- DE-A1-102010 040 365
- DE-A1-102011 014 026
- JP-A- 2000 240 441
- JP-A- 2005 248 823

## Beschreibung

Die Erfindung betrifft ein Reduktionsmitteldosiersystem zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird, wobei die Förderleitung durch eine doppelwandige Förderleitung, insbesondere einen doppelwandigen Schlauch, gebildet ist, wobei das Reduktionsmittel durch die Innenleitung gefördert wird

Ein derartiges Reduktionsmitteldosiersystem ist aus DE 10 2010 040 365 A1 bekannt.

Aus DE 10 2011 014 026 A1 ist eine Einspritzdüse zur Einspritzung eines Reduktionsmittels in einem Abgassystem einer Verbrennungskraftmaschine zur selektiven katalytischen Reduktion, insbesondere zur Zerstäubung mittels Druckluft oder Treibgas, wobei die Düse zumindest eine Austrittsöffnung aufweist, bekannt.

Aus EP 0 558 452 A1 ist ein Verfahren zum Reinigen von Abgasen aus Verbrennungsanlagen, insbesondere Diesel-, Zündstrahl-, Gas/Diesel, großen Gas-Otto-Motoren, Gasturbinen und Kesselanlagen mit Verfeuerung von flüssigen, gasförmigen oder festen Brennstoffen, durch Einführen einer in einem Reaktionsmitteltank aufbereiteten wässrigen Harnstofflösung verschiedener Konzentrationen in den heißen Abgasstrom und eine wenigstens einstufige, katalytische Reaktion der schädlichen, gasförmigen Abgaskomponenten mit einer Reduktions- oder einer Reduktions- und einer Oxidationsstufe, bekannt.

Ferner betrifft die Erfindung ein Verfahren zum Betrieb eines Reduktionsmitteldosiersystems zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird.

Katalysatoren zur selektiven katalytischen Reduktion, sogenannte SCR-Katalysatoren (englisch: selective catalyic reduction, abgekürzt: SCR) werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel in das Abgassystem mit einer Dosiervorrichtung eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil gemäß DIN 70070, insbesondere das sogenannte AdBlue, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion (englisch selective catalyic reduction, SCR) der Ausstoß von Stickoxyden um etwa 90 % reduziert.

Bei den bekannten Reduktionsmitteldosiersystemen zur Einspritzung eines Reduktionsmittels in den Abgasstrom eines Verbrennungsmotors zur selektiven katalytischen Reduktion wird die Reduktionsmittellösung mittels einer Membran- oder Kolbenpumpe zur Düse gefördert. Dabei wird die Überwachung des Dosiersystems durch Auswertung des Messsignals eines NOx-Sensors, der im Abgasstrang hinter dem Katalysator angeordnet ist, realisiert. Nachteilig dabei ist es, dass dieses Signal nicht genau genug ist, um eine Leckage in der Reduktionsmittelförderleitung zu erkennen. Eine Überwachung der Dosierung über einen gewissen Zeitraum mittels eines Vergleiches zwischen geförderter Dosiermenge und der Änderung des Tankfüllstandes ist mit ausreichender Genauigkeit realisierbar, jedoch würde diese Vorgehensweise nicht sicherstellen können, das tatsächlich die gesamte geförderte Dosiermenge auch in den Abgasstrang eingeleitet wurde und nicht etwa eine Leckage in der Förderleitung vorliegt.

Die Aufgabe der Erfindung ist es, ein Reduktionsmitteldosiersystem der eingangs genannten Art derart weiter zu bilden, dass eine Leckage in der Reduktionsmittelförderleitung und/oder das Entfernen der Düse aus dem Abgasstrang sicher erkannt werden kann.

Eine weitere Aufgabe der Erfindung ist es, ein Verfahren zum Betrieb eines Reduktionsmitteldosiersystems anzugeben, welches die Überwachung der Dosierung und das Erkennen einer Leckage in der Reduktionsmittelförderleitung und/oder das Entfernen der Düse aus dem Abgasstrang ermöglicht.

Diese Aufgabe wird erfindungsgemäß durch ein Reduktionsmitteldosiersystem gemäß Anspruch 1 und durch ein Verfahren zum Betrieb eines Reduktionsmitteldosiersystems gemäß Anspruch 7 gelöst. Vorteilhafte Weiterbildungen der Erfindung sind in den jeweiligen abhängigen Ansprüchen angegeben.

Besonders vorteilhaft bei dem Reduktionsmitteldosiersystem zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird, ist es, dass die Förderleitung durch eine doppelwandige Förderleitung, insbesondere einen doppelwandigen Schlauch, gebildet ist, wobei das Reduktionsmittel durch die Innenleitung gefördert wird.

Insbesondere kann das Reduktionsmitteldosiersystem eine die Förderpumpe enthaltende Pumpeneinheit aufweisen. Diese Pumpeneinheit kann zusätzlich zu der Förderpumpe weitere Bauteile, insbesondere Schaltventile und/oder Sensoren aufweisen.

Die Förderleitung kann somit auch durch einen doppelwandigen Schlauch mit einem Innenschlauch innerhalb eines Außenschlauches gebildet sein, wobei das Reduktionsmittel durch den Innenschlauch gefördert wird. Im Folgenden wird der Begriff des Schlauches synonym mit dem Begriff der Leitung verwendet, d.h. dass beispielsweise mit dem Begriff des doppelwandigen Schlauches gleichzeitig der Begriff einer doppelwandigen Förderleitung als Synonym mit umfasst ist. Gleiches gilt für die Begriffspaare des Innenschlauches und der Innenleitung sowie des Außenschlauches und der Außenleitung.

Ein flexibler doppelwandiger Schlauch bietet dabei insbesondere den Vorteil, dass dieser flexibel und biegsam ist, und dadurch geeignet ist, Vibrationen, wie sie bei Fahrzeugen, Nutzfahrzeugen und dergleichen typischerweise auftreten, auszugleichen, ohne dass es zu einem Abriss der Förderleitung kommt.

Besonders vorteilhaft bei dem Verfahren zum Betrieb eines Reduktionsmitteldosiersystems zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird, ist es, dass die Förderleitung durch einen doppelwandigen Schlauch mit einem Innenschlauch innerhalb eines Außenschlauches gebildet ist, wobei das Reduktionsmittel durch den Innenschlauch gefördert wird und der Druck in dem Innenschlauch mittels eines Drucksensors erfasst und überwacht wird.

Die Begriffe Reduktionsmitteldosiersystem bzw. Dosiersystem werden im Sinne der Erfindung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

Bei der Dosierpumpe kann es sich insbesondere um eine Membranpumpe oder eine Kolbenpumpe oder eine Kreiselpumpe oder eine Orbitalpumpe oder eine Zahnradpumpe handeln. Vorzugsweise ist die Förderpumpe druckbegrenzt und/oder es kann zwischen der Förderpumpe und der Dosierkammer ein Druckbegrenzer in die Förderleitung integriert sein.

In einer bevorzugten Gesamtanordnung weist das Reduktionsmitteldosiersystem einen Tank auf, in den die Reduktionsmittellösung eingefüllt wird und aus dem die Reduktionsmittellösung entnommen und mittels der Förderpumpe gefördert und über zumindest eine Düse in den Abgasstrom des Verbrennungsmotors eingeleitet wird.

Kern der Erfindung ist somit, dass bei dem Dosiersystem die Förderleitung, durch die das Reduktionsmittel von der Förderpumpe zur Düse gefördert wird, als doppelwandiger Schlauch ausgeführt ist.

Besonders bevorzugt weist das System eine Druckluftversorgung auf und das Reduktionsmittel wird innerhalb oder außerhalb der Düse mittels Druckluft zerstäubt. Dabei kann die Druckluftversorgung ein Schaltventil und/oder ein Druckregelventil aufweisen. Dieses Schaltventil dient der Steuerung, d. h. der Ein- und Abschaltung der Druckluftversorgung für das gesamte oder einen Teil des Dosiersystems.

Alternativ oder kumulativ kann die Druckluftversorgung ein Druckregelventil aufweisen. Hierdurch kann die Druckluft auf ein zur Zerstäubung des Reduktionsmittels mittels Druckluft gewünschtes Druckniveau eingestellt werden. Die Druckluft selbst kann aus einem bordeigenen Druckluftsystem, beispielsweise eines Nutzfahrzeuges, in dessen Abgastrakt das Dosiersystem angeordnet ist, entnommen werden, ohne dass der in dem Druckluftsystem vorherrschende Systemdruck eine Einschränkung darstellt, da der Druck der Druckluft auf den gewünschten Druck abgesenkt werden kann.

In einer bevorzugten Ausführungsform des Reduktionsmitteldosiersystems ist demnach eine Druckluftversorgung vorgesehen, wobei das Reduktionsmittel innerhalb oder außerhalb der Düse mittels Druckluft zerstäubt wird. Zur Zerstäubung des Reduktionsmittels kann eine Mischkammer vorgesehen sein, innerhalb derer eine Zerstäubung des Reduktionsmittels mittels der Druckluft bereits vor der Einleitung in den Abgastrakt erfolgt. In einer bevorzugten Ausführungsform ist jedoch die Düse als außenmischende Zweistoffdüse ausgebildet, bei der aus einer ersten Düsenöffnung die Reduktionsmittellösung austritt und aus einer zweiten Düsenöffnung Druckluft austritt, wobei die beiden Düsenöffnungen derart zueinander ausgerichtet sind, dass die Druckluft das Reduktionsmittel außerhalb der Düse zerstäubt, so dass die Düse als außenmischende Zweistoffdüse ausgebildet ist und die Aerosolbildung außerhalb der Düse erfolgt.

Vorzugsweise wird durch den Außenschlauch Druckluft zur Düse gefördert, die zur Zerstäubung des Reduktionsmittels dient.

Dadurch dass die Förderleitung als doppelwandiger Schlauch ausgeführt ist, können Leckagen der Reduktionsmittelförderleitung durch eine Überwachung des Druckes und/oder der Temperatur in dem Innenschlauch und/oder des Druckes und/oder der Temperatur im Außenschlauch leicht erkannt werden.

Vorzugsweise weist der Innenschlauch und/oder die Pumpeneinheit einen Temperatursensor und/oder einen Drucksensor auf.

Vorzugsweise weist der Außenschlauch und/oder die Pumpeneinheit einen Temperatursensor und/oder einen Drucksensor auf.

Derartige Sensoranordnungen am Innenschlauch und/oder am Außenschlauch und/oder in der Pumpeneinheit können auch durch kombinierte Temperatur- und Drucksensoren gebildet sein.

Mittels derartiger Sensoren können der Druck und/oder die Temperatur in dem Innenschlauch und/oder im Außenschlauch und/oder in der Pumpeneinheit erfasst und somit überwacht werden, um hierdurch Leckagen des Innenschlauches leicht zu erkennen.

Sofern der Innenschlauch, durch den das Reduktionsmittel gefördert wird, eine Leckage aufweist, tritt die Reduktionsmittellösung in den Außenschlauch ein und kann zur Verstopfung oder kurzzeitigen Verstopfung der Druckluftaustrittsdüse führen, wodurch Druckspitzen im Außenschlauch auftreten. Derartige Druckspitzen treten bereits auf, wenn der Luftmassenstrom mit einem Flüssigkeitstropfen behaftet ist und auf die sehr enge Luftaustrittsöffnung an der Düse trifft.

Durch eine Drucküberwachung mittels eines Drucksensors am Außenschlauch können derartige Druckspitzen erkannt werden, wodurch eine Leckage des Innenschlauches zuverlässig detektiert werden kann.

Der korrekte Sitz der Schlauchverbindungen an der Düse kann durch eine gezielte Pulsation der Druckluft und Messung dieses Einflusses auf den Druck im Innenschlauch detektiert werden, da bei korrektem Anschluss des Innenschlauches und des Außenschlauches an die Düse Druckpulsationen im Außenschlauch einen Einfluss auf den Druck im Innenschlauch haben. Sollte die Düsenverbindung mit dem Abgasstrang nicht mehr korrekt sein, so lässt sich dies durch eine Messung und Überwachung des Druckes im Innenschlauch sowie im Außenschlauch detektieren, da sowohl am Innen- als auch am Außenschlauch dann nicht mehr der Abgasgegendruck anliegt, sondern lediglich der Atmosphärendruck. Hierdurch lässt sich auch ein Herausrutschen der Düse aus der Düsenhalterung am Abgasstrang detektieren.

Durch die Überwachung der Drücke im Innenschlauch und im Außenschlauch lassen sich somit verschiedenste denkbare Fehler zuverlässig detektieren, so dass eine entsprechende Meldung in einem Fehlerspeicher des Fahrzeuges abgelegt werden kann und/oder der Fahrzeugführer eine entsprechende Meldung erhält, so dass das Reduktionsmitteldosiersystem in Stand gesetzt werden kann.

Hierdurch kann eine absolut zuverlässige Leckageüberwachung bei einem Reduktionsmitteldosiersystem zur Einspritzung eines Reduktionsmittels in den Abgasstrom eines Verbrennungsmotors zur selektiven katalytischen Reduktion, wie sie insbesondere bei Nutzfahrzeugen und Personenkraftwagen mit Dieselmotor zum Einsatz kommen, realisiert werden.

Vorzugsweise weist das System eine Beheizungseinrichtung zur Beheizung der Reduktionsmittellösung auf. Die vielfach eingesetzte Reduktionsmittellösung gemäß DIN 70070 gefriert aufgrund ihres Wassergehaltes bei ca. -11 °C. Daher ist es erforderlich, eine Beheizungseinrichtung zur Beheizung der Reduktionsmittellösung für den Fall sehr niedriger Umgebungstemperaturen vorzusehen.

In einer besonders bevorzugten Ausführungsform weist das System eine Beheizungseinrichtung zur Beheizung von Luft, insbesondere Druckluft, zur Einleitung in den Außenschlauch auf. Hierdurch kann eine Anordnung geschaffen werden, bei der mittels des im Außenschlauch befindlichen aufgeheizten Fluides eine Beheizung der im Innenschlauch geförderten Reduktionsmittellösung erfolgt, so dass ein Einfrieren der Reduktionsmittellösung zwischen Förderpumpe und Düse zuverlässig verhindert wird.

Vorzugsweise ist der Innenschlauch über einen Stutzen an die Düse angeschlossen. Besonders bevorzugt ist der Außenschlauch über einen äußeren Stutzen an die Düse angeschlossen.

Vorzugsweise weist die Düse zwei Anschlussstutzen auf, wobei der Reduktionsmittel führende Innenschlauch über den ersten Stutzen an die Düse angeschlossen ist und der Druckluft führende Außenschlauch über den zweiten Stutzen an die Düse angeschlossen ist, wobei es sich bei der Düse um eine außen mischende Zweistoffdüse handelt. Dabei kann die Düse als kompakter Düsenkörper ausgeführt sein.

Vorzugsweise handelt es sich um eine außen mischende Zerstäuberdüse, d.h., dass die Aerosolbildung außerhalb des Düsenkörpers erfolgt, indem die Reduktionsmittellösung über eine erste Düsenöffnung oder eine erste Gruppe von Düsenöffnungen in den Abgasstrang geleitet wird, wobei Druckluft über eine zweite Düsenöffnung oder eine zweite Gruppe von Düsenöffnungen in den Abgasstrang geleitet wird, wobei die erste Düsenöffnung/erste Gruppe von Düsenöffnungen und die zweite Düsenöffnung/zweite Gruppe von Düsenöffnungen derart zueinander angeordnet sind, dass die Druckluft in einem Winkel relativ zur Strahlrichtung des Reduktionsmittels aus dem Düsenkörper austritt, so dass außerhalb des Düsenkörpers das Reduktionsmittel mittels der Druckluft zerstäubt wird und somit eine Aerosolbildung außerhalb der Düse erfolgt. Dabei kann insbesondere die Luftaustrittsöffnung als konzentrischer Ringspalt um eine zentrale erste Düsenöffnung herum angeordnet sein, wobei durch die zentrale erste Düsenöffnung das Reduktionsmittel austritt. Dieser konzentrische Ringspalt kann auch dergestalt ausgebildet sein, dass eine Gruppe von Düsenöffnungen auf einer Kreislinie oder dergleichen um eine zentrale Austrittsöffnung für das Reduktionsmittel herum angeordnet ist.

Die Anschlussstutzen der Düse, an welche der Innenschlauch und der Außenschlauch angeschlossen werden, können als glatte Stutzen ausgeführt sein, über die die Schlauchenden geschoben werden. Die Anschlussstutzen können jedoch dergestalt ausgeführt sein, dass diese auf ihrem Außenumfang einen oder mehrere umlaufende Hinterschneidungen aufweisen, über die das Schlauchende geschoben wird, um ein Abziehen des Schlauches von dem Stutzen zu erschweren. Diese auf den Stutzen umlaufenden Erhebungen können zur Vorderseite hin abgeschrägt sein, um ein Aufschieben der Schlauchenden auf die Stutzen zu erleichtern. An jedem Stutzen können eine oder mehrere dieser umlaufenden Erhebungen und Hinterschneidungen vorgesehen sein.

Bevorzugt ist die Förderleitung oder zumindest der Innenschlauch über ein Schaltventil an eine Druckluftversorgung angeschlossen, um sie nach Beendigung der Dosierung mittels Druckluft von Reduktionsmittel zu befreien.

In dieser bevorzugten Ausführungsform des Reduktionsmitteldosiersystems ist somit eine Druckluftversorgung vorgesehen, wobei die Förderleitung oder zumindest der Innenschlauch und damit auch die Düse über ein Schaltventil an die Druckluftversorgung angeschlossen sind, um sie nach Beendigung der Dosierung mittels Druckluft von Reduktionsmittel zu befreien.

Hierdurch können die Förderleitung, insbesondere zumindest der Innenschlauch, und/oder die Dosierkammer und/oder die Dosierleitung nach Beendigung der Dosierung mittels der Druckluft von der Reduktionsmittellösung befreit werden, um ein Einfrieren oder Auskristallisieren der Reduktionsmittellösung zu verhindern. Hierdurch kann Frostschäden effektiv vorgebeugt werden.

Die Druckluft kann somit alternativ oder kumulativ zur Zerstäubung des Reduktionsmittels im Abgasstrang und zur Reinigung der Reduktionsmittelführenden Leitungen nach Beendigung der Dosierung genutzt werden.

Bei dem Verfahren zum Betrieb eines Reduktionsmitteldosiersystem zur Einspritzung eines Reduktionsmittels in den Abgasstrom eines Verbrennungsmotors zur selektiven katalytischen Reduktion wird in einer besonders vorteilhaften Weiterbildung durch den Außenschlauch Druckluft zur Düse gefördert wird, mittels derer das Reduktionsmittel innerhalb oder außerhalb der Düse zerstäubt wird, wobei der Druck in dem Außenschlauch mittels eines Drucksensors erfasst und überwacht wird.

Durch eine solche Überwachung des Druckes in dem Außenschlauch mittels eines Drucksensors können Leckagen des Innenschlauches und/oder des Außenschlauches schnell und zuverlässig erkannt werden.

Insbesondere kann in Dosierpausen der Druck in dem Innenschlauch und/oder in dem Außenschlauch mit hinterlegten Abgasgegendruckkennfeldern verglichen werden. Insbesondere kann dabei der gemessene zeitliche Verlauf des Druckes in dem Innenschlauch und/oder der gemessene zeitliche Verlauf des Druckes in dem Außenschlauch mit hinterlegten Abgasgegendruckkennfeldern verglichen werden

Vorzugsweise wird eine Diagnoseroutine durchgeführt, bei der Luftdruckpulsationen erzeugt werden und der Druck in dem Innenschlauch erfasst und überwacht wird. Dies kann insbesondere die Erfassung und Auswertung des zeitlichen Verlaufes des Druckes in dem Innenschlauch mit umfassen.

Besonders bevorzugt werden das Reduktionsmittel und/oder Druckluft bei Umgebungstemperaturen unterhalb des Schmelzpunktes des Reduktionsmittels beheizt.

Bevorzugt wird die Förderleitung und/oder die Dosierkammer und/oder die Dosierleitung nach Beendigung der Dosierung über ein Schaltventil an eine Druckluftversorgung angeschlossen, um sie mittels Druckluft von Reduktionsmittel zu befreien.

Hierdurch können die Förderleitung und/oder die Dosierkammer und/oder die Dosierleitung nach Beendigung der Dosierung mittels der Druckluft von der Reduktionsmittellösung befreit werden, um ein Einfrieren oder Auskristallisieren der Reduktionsmittellösung zu verhindern. Hierdurch kann Frostschäden effektiv vorgebeugt werden.

Die Druckluft kann somit alternativ oder kumulativ zur Zerstäubung des Reduktionsmittels im Abgasstrang und zur Reinigung der Reduktionsmittelführenden Leitungen nach Beendigung der Dosierung genutzt werden.

Ein Ausführungsbeispiel der Erfindung ist in den Figuren dargestellt und wird nachfolgend näher erläutert. Es zeigen:
- Fig. 1: Ein Schema eines Reduktionsmitteldosiersystems mit doppelwandiger Förderleitung;
- Fig. 2: den zeitlichen Verlauf des Druckes in der Luftdruckleitung bei einer Leckage der Reduktionsmittelleitung;
- Fig. 3: den zeitlichen Verlauf des Druckes in der Luftdruckleitung und in der Reduktionsmittelleitung bei einem korrekten Anschluss der Leitungen an der Düse und korrektem Sitz der Düse im Abgasstrang;
- Fig. 4: den zeitlichen Verlauf des Druckes in der Luftdruckleitung und in der Reduktionsmittelleitung und Durchführung eines Testlaufes.

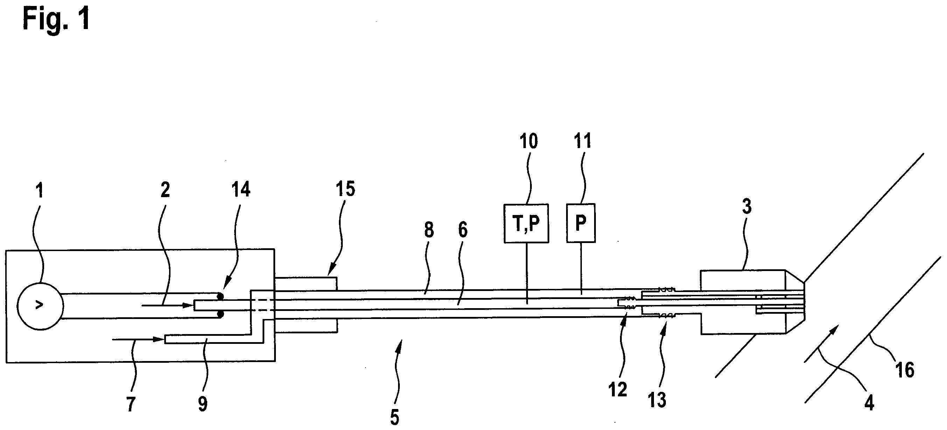

In Fig. 1 ist ein Schema eines Reduktionsmitteldosiersystems zur Einspritzung eines Reduktionsmittels in den Abgasstrom eines Verbrennungsmotors zur selektiven katalytischen Reduktion dargestellt. Dabei wird mittels einer Förderpumpe 1 das durch den Pfeil 2 dargestellte Reduktionsmittel aus einem nicht dargestellten Reduktionsmitteltank zur Einspritzung in den Abgasstrom 4 innerhalb des Abgastraktes 16 des Verbrennungsmotors gefördert.

Das Reduktionsmittel 2 wird über die Förderleitung 5 zur Düse 3 zur Einleitung in den Abgasstrom 4 gefördert.

Die Förderleitung 5 ist als doppelwandiger Schlauch mit einem Innenschlauch 6 ausgeführt, der innerhalb des Außenschlauches 8 verläuft.

Das Dosiersystem weist eine Druckluftversorgung 7 auf, über die Druckluft über den Druckluftanschluß 9 ebenfalls in die doppelwandige Förderleitung 5 in den Außenschlauch 8 eingeleitet wird.

Die doppelwandige Förderleitung 5 ist über entsprechende Anschlussstutzen 12, 13 an den Düsenkörper angeschlossen. Der Innenschlauch 6, durch den das Reduktionsmittel 2 zur Düse 3 gefördert wird, ist über den ersten Anschlussstutzen 12 an die Düse 3 angeschlossen. Der Außenschlauch 8, durch den die Druckluft zur Düse 3 gefördert wird, ist über den zweiten äußeren Anschlussstutzen 13 an den Düsenkörper angeschlossen.

Beide Anschlussstutzen 12, 13 weisen umlaufende Hinterschneidungen auf, die an ihrer Vorderseite abgeschrägt sind, um das Aufschieben der Schlauchenden zu erleichtern und die Schlauchenden auf den Stutzen 12, 13 zu sichern.

Bei der Düse 3 handelt es sich um eine außen mischende Zweistoffdüse, wobei über eine erste Düsenöffnung das Reduktionsmittel in den Abgastrakt 16 eingespritzt wird. Über eine konzentrische zweite Düsenöffnung wird Druckluft in den Abgastrakt 16 eingeleitet, wobei die zweite konzentrische Düsenöffnung zur ersten Düsenöffnung dergestalt angeordnet ist, dass die Druckluft die aus der ersten Düsenöffnung austretende Reduktionsmittellösung außerhalb der Düse 3 in dem Abgastrakt 16 zerstäubt.

Der Innenschlauch 6 ist über einen O-Ring 14 am Druckstutzen der Pumpe 1 abgedichtet und ist wie in Fig. 1 dargestellt länger als der Außenschlauch 8. Der Außenschlauch 8 ist über eine Verriegelung 15 an der Luftleitung 9 angeschlossen und gegen die Umgebung abgedichtet.

Der Innenschlauch 6 oder die Pumpeneinheit weist einen kombinierten Druck- und Temperatursensor 10 auf, mittels dessen der Druck und die Temperatur des Fluides innerhalb des Innenschlauches 6 erfasst wird.

Der Außenschlauch 8 oder die Pumpeneinheit weist einen Drucksensor 11 auf, mittels dessen der Druck in dem Druckluft führenden Außenschlauch 8 erfasst wird.

Dadurch, dass die Förderleitung 5 als flexibler doppelwandiger Schlauch ausgebildet ist, in deren Innenschlauch 6 die Reduktionsmittellösung von der Pumpe 1 zur Düse 3 gefördert wird, können Vibrationen des Fahrzeuges, wie sie durch den Verbrennungsmotor selbst sowie durch Fahrbahnunebenheiten und dergleichen ausgelöst werden, ausgeglichen werden. Weiterhin gestaltet die erfindungsgemäße Ausgestaltung des Reduktionsmitteldosiersystems eine umfassende Überwachung der Förderleitung auf korrekte Anschlüsse hin sowie auf etwaige Leckagen, wie dies nachfolgend erläutert wird.

Zur Diagnose möglicher Fehlerquellen werden mittels der Sensoren 10, 11 die Drücke in der Innenleitung 6 und der Außenleitung 8 überwacht.

Ein Verstopfen des Innenloches der Düse 3, durch die das Reduktionsmittel in den Abgasstrom 4 eingeleitet wird, führt zu einem Druckanstieg am kombinierten Druck- und Temperatursensor 10 der Innenleitung 6. Dies bedeutet, dass bei einem Verstopfen des Reduktionsmittelkanales in der Düse 3 die Förderpumpe 1 einen hohen Druck in der Innenleitung 6 aufbaut. Mittels des kombinierten Druck- und Temperatursensors 10 kann dieser Druckanstieg innerhalb der Innenleitung 6 erkannt werden.

Ein Verstopfen des Ringspaltes, durch welchen die Druckluft aus der Düse zur Zerstäubung des Reduktionsmittels in den Abgasstrom 4 eingeleitet wird, führt dazu, dass die Druckluftversorgung 7 einen höheren Druck innerhalb des Außenschlauches 8 aufbaut, als dies bei normalem Luftdurchsatz der Fall ist. Mittels des Drucksensors 11 wird dieser Druckanstieg in der Außenleitung 8 erkannt.

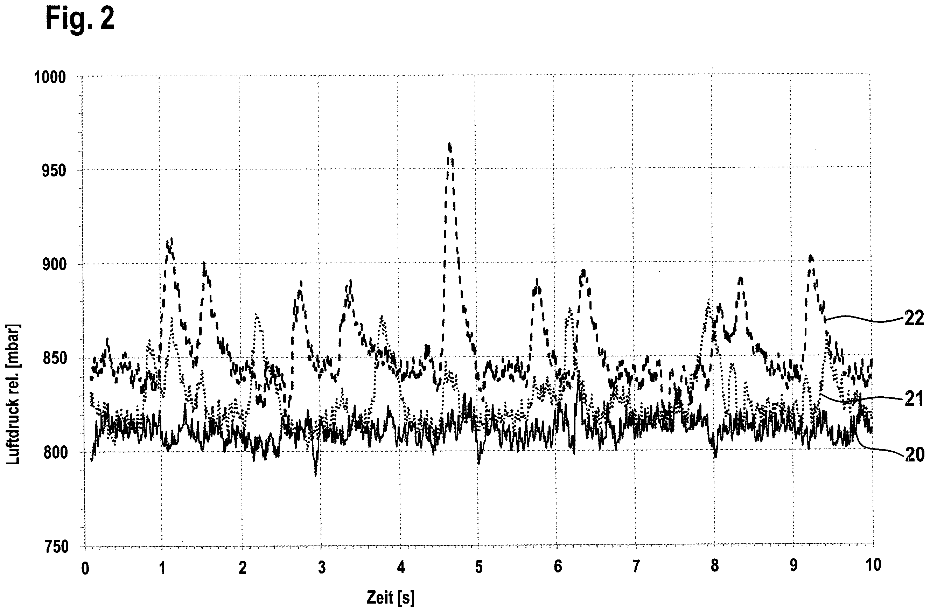

Eine Leckage der Reduktionsmittelleitung 6 kann dazu führen, dass Reduktionsmittel aus der Innenleitung 6 in die Außenleitung 8 und damit in den Ringspalt in der Düse 3 gelangt. Die Druckaufzeichnung über der Zeit infolge einer solchen Leckage der Innenleitung 6 zeigt Fig. 2. Auf der Abszisse ist die Zeit in Sekunden aufgetragen. Auf der Ordinate ist der Luftdruck in mbar aufgetragen.

Der Druckverlauf 20 zeigt zunächst den Druckverlauf anhand des Druckluftsensors 11 im Außenschlauch 8 ohne Auftreten einer Leckage. Es zeigt sich ein relativ gleich bleibender Druckverlauf mit geringen Schwankungen über der Zeit. Ferner sind in Fig. 2 weitere Druckverläufe 21, 22 aufgetragen.

Aufgrund einer Leckage gelangt beim Dosieren des Reduktionsmittels 2 eine Teilmenge in den Zwischenraum der Schläuche 6, 8, d.h. in den Außenschlauch 8. Die durch den Luftstrom transportierten Tröpfchen erzeugen in dem Ringspalt der Düse 3 einen höheren Gegendruck. Mittels des Druckluftsensors 11 werden diese Druckspitzen in den Kurven 21 und 22 detektiert.

Der Druckverlauf 21 zeigt den Druckverlauf in der Außenleitung 8 bei Auftreten einer Leckage der Reduktionsmittelleitung 6 und Austreten von Reduktionsmittel in die Druckluftleitung 8, was dazu führt, dass in dem Ringspalt der Düse 3 Verstopfungen durch die Flüssigkeit auftreten. Der Druckverlauf 21 zeigt den Druckluftverlauf in der Außenleitung 8 bei einer Pumpfrequenz der Pumpe 1 von 2 Hz. Der Druckverlauf 22 zeigt den Luftdruckverlauf über der Zeit in der Außenleitung 8 bei einer Pumpfrequenz der Pumpe 1 von 4 Hz. Deutlich erkennbar sind die auftretenden Druckspitzen infolge der Verstopfung des Ringspaltes in der Düse 3 durch Reduktionsmittel.

Ferner kann das in den Ringspalt der Düse 3 geförderte Reduktionsmittel Rückstände hinterlassen und den Ringspalt für den Druckluftaustritt an der Düse 3 verstopfen. Mittels des Luftdrucksensors 11 am Außenschlauch 8 wird dieser Druckanstieg erkannt und es kann der Fehler dementsprechend diagnostiziert werden.

Eine Leckage der Dosierleitung kann ferner dazu führen, dass Luft in die Innenleitung 6 gelangt, was dazu führen kann, dass mittels des kombinierten Druck- und Temperatursensors 10 an der Innenleitung 6 erkannt werden kann, dass in Dosierpausen der Druck größer ist als der Abgasgegendruck aus dem Abgasstrang 16. Bei einer Leckage der inneren Reduktionsmittelleitung 6 verringert sich der Gegendruck durch den nun geringeren Luftmassenstrom im Ringspalt der Düse 3. Dieser Gegendruck ist geringer, als bei normalem Luftdurchsatz und wird mittels des Luftdrucksensors 8 als zu gering erkannt. Hierdurch kann eine Leckage der Reduktionsmittelleitung 6 entsprechend detektiert werden.

Bei einer Leckage der äußeren Luftleitung 8 verringert sich der Gegendruck durch den nun geringeren Luftmassenstrom im Ringspalt der Düse 3. Dieser Gegendruck ist geringer als bei normalen Luftdurchsatz und wird mittels des Luftdrucksensors 11 als zu gering erkannt. Eine Leckage der Luftleitung 8 führt somit zu einem Druckabfall am Luftdrucksensor 11 der Außenleitung 8 und kann entsprechend erkannt werden.

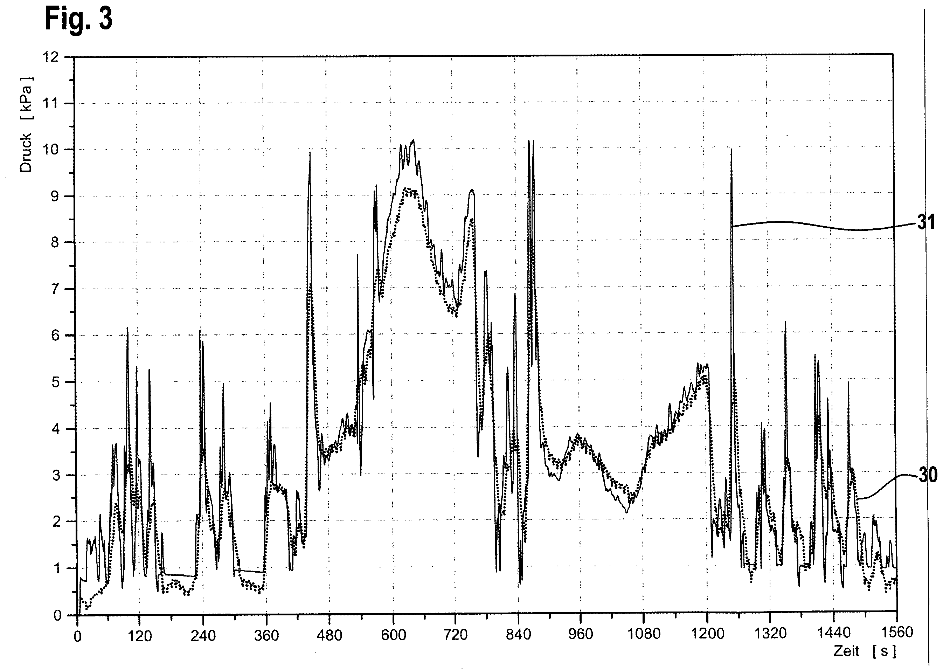

Bei einem vollständigen Abriss der Leitungen 6, 8 von der Düse 3 kann kein Abgasgegendruck gemessen werden. Dies kann mit einem hinterlegten Abgasgegendruckkennfeld verglichen werden, um einen entsprechenden Leitungsabriss zu detektieren. Eine entsprechende Druckaufzeichnung über der Zeit zeigt Fig. 3. Auf der Abszisse ist aufgetragen die Zeit in Sekunden. Auf der Ordinate ist aufgetragen der Druck in kPa.

Aufgetragen in dem Diagramm gemäß Fig. 3 ist der Druckverlauf 30 in der Reduktionsmittelleitung 6 sowie der Druckverlauf 31 im Abgasstrang 16 entsprechend dem Abgasgegendruck. Bei korrektem Anschluss der Förderleitung 5 an die Düse 3 und den Abgastrakt 16 spiegelt sich der Druckverlauf des Abgasgegendruckes 31 im Druckverlauf 30 in der Reduktionsmittelleitung 6, der mittels des kombinierten Druck- und Temperatursensors 10 erfasst werden kann. In einer Dosierpause spiegelt auch mit gefüllter Dosierleitung 6 der Druck- und Temperatursensor 10 den zeitlichen Druckverlauf des Abgases wieder. Die in Fig. 3 dargestellte Aufzeichnung der Druckverläufe 30, 31 ist ohne Reduktionsmitteldosierung erfolgt, d.h., dass in Dosierpausen diese Diagnoseroutine angewandt werden kann. Hierzu sind im System Abgasgegendruckkennfelder hinterlegt, um den mittels des kombinierten Druck- und Temperatursensors 10 in der Reduktionsmittelleitung 6 erfassten Druckverlauf mit diesen Kennfeldern zu vergleichen und einen etwaigen Abriss der Förderleitung 5 von der Düse 3 zu detektieren, da dann kein Abgasgegendruck und dementsprechend nicht die zeitlichen Schwankungen, die aus dem anliegenden Abgasgegendruck resultieren, gemessen werden können.

Sofern die Düse 3 vollständig aus dem Abgasstrang 16 entfernt werden sollte, kann ebenfalls kein Abgasgegendruck mehr mittels der Drucksensoren 10, 11 an den beiden Schläuchen 6, 8 der doppelwandigen Reduktionsmittelförderleitung 5 erfasst werden. Durch Vergleich mit einem hinterlegten Abgasgegendruckkennfeld kann dieser Fehler detektiert werden.

Ferner kann durch eine spezielle Diagnoseroutine die Sogwirkung der Düse 3 überprüft werden. Diese Art der Diagnose schließt den gesamten Pfad vom Luftdrucksensor 11 bis zur Düse 3 und wieder zurück zum Druck- und Temperatursensor 10 innerhalb der Reduktionsmittel 6 ein. Hierbei werden Luftdruckpulsationen erzeugt, die sich über die Sogwirkung der Düse 3 auf den Drucksensor 10 in der Reduktionsmittelförderleitung 6 widerspiegeln.

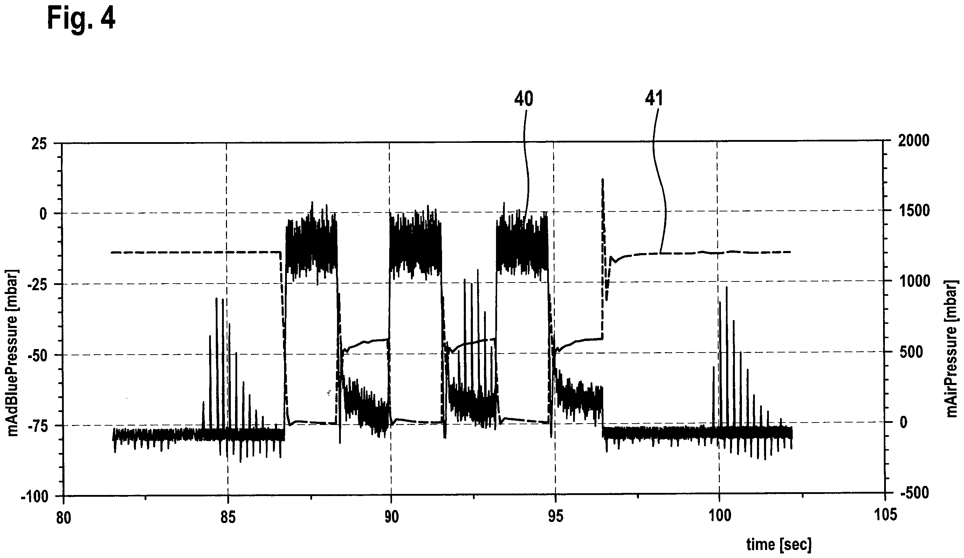

Die entsprechenden Druckverläufe über der Zeit in Sekunden sind in Fig. 4 dargestellt. Auf der Abszisse ist die Zeit in Sekunden aufgetragen. Auf der Ordinate ist der Druck in mbar aufgetragen.

Fig. 4 zeigt den zeitlichen Verlauf des Druckes 40 in der Reduktionsmittelförderleitung 6, der mittels des Druck- und Temperatursensors 10 erfasst wird. Ferner zeigt Fig. 4 den zeitlichen Verlauf des Luftdruckes 41 in der Druckluftleitung 8, der mittels des Drucksensors 11 erfasst wird. Wie Fig. 4 zu entnehmen ist, werden im Rahmen der Diagnoseroutine gezielt Luftdruckpulsationen erzeugt, wie dies am zeitlichen Verlauf des Luftdruckes 41 erkennbar ist. Diese Luftdruckpulsationen werden durch die Sogwirkungen der Düse 3 durch entsprechende Druckschwankungen beim Druckverlauf 40 in der Reduktionsmittelleitung 6 abgebildet. Sofern das Drucksignal 40 in der Reduktionsmittelleitung 6 unberührt geblieben wäre, wäre der Kreis unterbrochen. Mit Messung eines Abgasgegendruckes und bei sich widerspiegelndem Drucksignal ist der Leitungskreis geschlossen und die Düse 3 ist ordnungsgemäß mit dem Abgasstrang 16 verbunden. Wie Fig. 4 zu entnehmen ist, erfolgt bei gezielt erzeugten Pulsation der Druckluft 41 mit Schwankungen von 500 mbar eine entsprechende Druckdifferenz im Druckverlauf 40 in der Reduktionsmittelleitung von über 50 mbar.

Durch entsprechende Drucküberwachungen in den Förderleitungen 6, 8 mittels der Sensoren 10, 11 lassen sich somit eine Vielzahl von Fehlern detektieren. Durch Durchführung entsprechender Diagnoseroutinen und gezielter Lufttdruckpulsationen können umfangreiche Diagnosefunktionen durchgeführt werden und verschiedenste Fehler, wie Undichtigkeiten einzelner Schläuche 6, 8 oder der Abriss der gesamten Anordnung können zuverlässig erkannt werden.

## Patentansprüche

1. Reduktionsmitteldosiersystem zur Einspritzung eines Reduktionsmittels (2) in den Abgasstrom (4) eines Verbrennungsmotors zur selektiven katalytischen Reduktion, mit einer Förderpumpe (1), insbesondere mit einer die Förderpumpe (1) aufweisenden Pumpeneinheit, mittels derer Reduktionsmittel (2) aus einem Reduktionsmitteltank über eine Förderleitung gefördert und über zumindest eine Düse (3) in den Abgasstrom (4) des Verbrennungsmotors eingeleitet wird, wobei die Förderleitung durch einen doppelwandigen Schlauch (5) gebildet ist, wobei das Reduktionsmittel (2) durch den Innenschlauch (6) gefördert wird, wobei die Düse als außenmischende Zweistoffdüse ausgebildet ist und die Aerosolbildung außerhalb der Düse erfolgt, wobei durch den Außenschlauch (8) Druckluft zur Düse (3) gefördert wird, die zur Zerstäubung des Reduktionsmittels (2) dient, wobei der Außenschlauch (8) einen Drucksensor (11) aufweist, das System eine Druckluftversorgung (7) aufweist und wobei die Druckluftversorgung (7) ein Schaltventil und/oder ein Druckregelventil aufweist, **dadurch gekennzeichnet, dass** die Düse (3) zwei Anschlussstutzen (12, 13) aufweist, wobei der Reduktionsmittel führende Innenschlauch (6) über den ersten Stutzen (12) an die Düse (3) angeschlossen ist und der Druckluft führende Außenschlauch (8) über den zweiten Stutzen (13) an die Düse (3) angeschlossen ist.

2. Dosiersystem nach Anspruch 1, **dadurch gekennzeichnet, dass** der Innenschlauch (6) und/oder die Pumpeneinheit einen Temperatursensor und/oder einen Drucksensor (10) aufweist.

3. Dosiersystem nach einem der vorherigen Ansprüche, **dadurch gekennzeichnet, dass** der Außenschlauch (8) einen Temperatursensor und/oder die Pumpeneinheit einen Temperatursensor und/oder einen Drucksensor (11) aufweist.

4. Dosiersystem nach einem der vorherigen Ansprüche, **dadurch gekennzeichnet, dass** das System eine Beheizungseinrichtung zur Beheizung der Reduktionsmittellösung aufweist.

5. Dosiersystem nach einem der vorherigen Ansprüche, **dadurch gekennzeichnet, dass** das System eine Beheizungseinrichtung zur Beheizung von Druckluft zur Einleitung in den Außenschlauch (8) aufweist.

6. Dosiersystem nach einem der vorherigen Ansprüche, **dadurch gekennzeichnet, dass** die Förderleitung (5) oder zumindest der Innenschlauch (6) über ein Schaltventil an eine Druckluftversorgung (7) angeschlossen ist, um sie nach Beendigung der Dosierung mittels Druckluft von Reduktionsmittel (2) zu befreien.

7. Verfahren zum Betrieb eines Reduktionsmitteldosiersystems nach einem der Ansprüche 1 bis 6 zur Einspritzung eines Reduktionsmittels (2) in den Abgasstrom (4) eines Verbrennungsmotors zur selektiven katalytischen Reduktion, mit einer Förderpumpe (1), mittels derer Reduktionsmittel (2) aus einem Reduktionsmitteltank über eine Förderleitung gefördert und über zumindest eine Düse (3) in den Abgasstrom (4) des Verbrennungsmotors eingeleitet wird, wobei die Förderleitung durch einen doppelwandigen Schlauch (5) mit einem Innenschlauch (6) innerhalb eines Außenschlauches (8) gebildet ist, wobei das Reduktionsmittel (2) durch den Innenschlauch (6) gefördert wird und der Druck in dem Innenschlauch (6) mittels eines Drucksensors (10) erfasst und überwacht wird, wobei durch den Außenschlauch (8) Druckluft zur Düse (3) gefördert wird, mittels derer das Reduktionsmittel (2) außerhalb der Düse (3) zerstäubt wird, wobei der Druck (20, 21, 22) in dem Außenschlauch (8) mittels eines Drucksensors (11) erfasst und überwacht wird, **dadurch gekennzeichnet, dass** eine Diagnoseroutine durchgeführt wird, bei der Luftdruckpulsationen (41) erzeugt werden und der Druck (40) in dem Innenschlauch (6) erfasst und überwacht wird.

## Claims

1. Reducing agent dosing system for the injection of a reducing agent (2) into the flow of exhaust gas (4) of a combustion engine, for selective catalytic reduction, with a feed pump (1), in particular a pump unit comprising the feed pump (1), by means of which reducing agent (2) is conveyed from a reducing agent tank via a conveyer pipe and is introduced, through at least one nozzle (3), into the flow of exhaust gas (4) of the combustion engine, wherein the conveyer pipe is formed by a double-walled tube (5), wherein the reducing agent (2) is conveyed through the inner tube (6), wherein the nozzle is formed as an externally mixing dual-substance nozzle and the formation of aerosol takes place outside the nozzle, wherein compressed air is conveyed through the outer tube (8) to the nozzle (3) which serves for nebulisation of the reducing agent (2), wherein the outer tube (8) comprises a pressure sensor (11), the system comprises a compressed air supply (7) and wherein the compressed air supply (7) comprises a switch valve and/or a pressure control valve, **characterized in that** the nozzle (3) comprises two connection pieces (12, 13), wherein the inner tube (6) carrying the reducing agent is connected to the nozzle (3) via the first connection piece (12) and the outer tube (8) carrying the compressed air is connected to the nozzle (3) via the second connection piece (13).

2. Dosing system according to claim 1, **characterized in that** the inner tube (6) and/or the pump unit comprises a temperature sensor and/or a pressure sensor (10).

3. Dosing system according to any of the preceding claims, **characterized in that** the outer tube (8) comprises a temperature sensor and/or the pump unit comprises a temperature sensor and/or a pressure sensor (11).

4. Dosing system according to any of the preceding claims, **characterized in that** the system comprises a heating device for heating the reducing agent solution.

5. Dosing system according to any of the preceding claims, **characterized in that** the system comprises a heating device for heating compressed air for introduction into the outer tube (8).

6. Dosing system according to any of the preceding claims, **characterized in that** the conveyer pipe (5) or at least the inner tube (6) is connected via a switch valve to a compressed air supply (7), to free it from reducing agent (2) by means of compressed air after termination of the dosing.

7. Method for operating a reducing agent dosing system according to any of claims 1 to 6 for the injection of a reducing agent (2) into the flow of exhaust gas (4) of a combustion engine, for selective catalytic reduction, with a feed pump (1), by means of which reducing agent (2) is conveyed from a reducing agent tank via a conveyer pipe and is introduced, through at least one nozzle (3), into the flow of exhaust gas (4) of the combustion engine, wherein the conveyer pipe is formed by a double-walled tube (5) with an inner tube (6) inside an outer tube (8), wherein the reducing agent (2) is conveyed through the inner tube (6) and the pressure in the inner tube (6) is detected and monitored by means of a pressure sensor (10), wherein compressed air is conveyed through the outer tube (8) to the nozzle (3) by means of which the reducing agent (2) is nebulised outside the nozzle (3), wherein the pressure (20, 21, 22) in the outer tube (8) is detected and monitored by means of a pressure sensor (11), **characterized in that** a diagnostic routing is carried out in which air pressure pulsations (41) are created and the pressure (40) in the inner tube (6) is detected and monitored.

## Revendications

1. Système de dosage d'agent réducteur pour injecter un agent réducteur (2) dans le courant de gaz d'échappement (4) d'un moteur à combustion afin d'effectuer une réduction catalytique sélective, comprenant une pompe d'alimentation (1), en particulier une unité de pompage présentant la pompe d'alimentation (1), au moyen de laquelle l'agent réducteur (2) est transporté d'un réservoir d'agent réducteur via une conduite d'alimentation et est introduit via au moins une buse (3) dans le courant de gaz d'échappement (4) du moteur à combustion, dans lequel la conduite d'alimentation est formée par un tuyau à double paroi (5), dans lequel l'agent réducteur (2) est acheminé à travers le tuyau interne (6), dans lequel la buse se présente sous la forme d'une buse binaire à mélange externe et la formation d'un aérosol se fait à l'extérieur de la buse, dans lequel de l'air comprimé est acheminé à travers le tuyau externe (8) à la buse (3), qui sert à diffuser l'agent réducteur (2), dans lequel le tuyau externe (8) présente un capteur de pression (11), le système présente une alimentation en air comprimé (7) et dans lequel l'alimentation en air comprimé (7) présente une soupape de commande et/ou une soupape de réglage de pression, **caractérisé en ce que** la buse (3) présente deux raccords (12, 13), dans lequel le tuyau interne (6) acheminant l'agent réducteur est raccordé à la buse (3) via le premier raccord (12) et le tuyau externe (8) acheminant l'air comprimé est raccordé à la buse (3) via le second raccord (13).

2. Système de dosage selon la revendication 1, **caractérisé en ce que** le tuyau interne (6) et/ou l'unité de pompage présente(nt) un capteur de température et/ou un capteur de pression (10).

3. Système de dosage selon l'une quelconque des revendications précédentes, **caractérisé en ce que** le tuyau externe (8) présente un capteur de température et/ou l'unité de pompage présente un capteur de température et/ou un capteur de pression (11).

4. Système de dosage selon l'une quelconque des revendications précédentes, **caractérisé en ce que** le système présente un dispositif de chauffage pour chauffer la solution d'agent réducteur.

5. Système de dosage selon l'une quelconque des revendications précédentes, **caractérisé en ce que** le système présente un dispositif de chauffage pour chauffer de l'air comprimé pour l'acheminer dans le tuyau externe (8).

6. Système de dosage selon l'une quelconque des revendications précédentes, **caractérisé en ce que** la conduite d'alimentation (5) ou au moins le tuyau interne (6) est raccordé(e) à une alimentation en air comprimé (7) via une soupape de commande pour la ou le libérer de l'agent réducteur (2) à la fin du dosage au moyen d'air comprimé.

7. Procédé de fonctionnement d'un système de dosage d'agent réducteur selon l'une quelconque des revendications 1 à 6 pour injecter un agent réducteur (2) dans le courant de gaz d'échappement (4) d'un moteur à combustion afin d'effectuer une réduction catalytique sélective, comprenant une pompe d'alimentation (1), à l'aide de laquelle l'agent réducteur (2) est acheminé d'un réservoir d'agent réducteur via une conduite d'alimentation et est introduit dans le courant de gaz d'échappement (4) du moteur à combustion via au moins une buse (3), dans lequel la conduite d'alimentation est formée d'un tuyau à double paroi (5) avec un tuyau interne (6) à l'intérieur d'un tuyau externe (8), dans lequel l'agent réducteur (2) est acheminé à travers le tuyau interne (6) et la pression dans le tuyau interne (6) est détectée et surveillée au moyen d'un capteur de pression (10), dans lequel de l'air comprimé est acheminé à la buse (3) à travers le tuyau externe (8) au moyen duquel l'agent réducteur (2) est diffusé à l'extérieur de la buse (3), dans lequel la pression (20, 21, 22) dans le tuyau externe (8) est détectée et surveillée au moyen d'un capteur de pression (11), **caractérisé en ce qu'**un programme de diagnostic est réalisé, dans lequel des impulsions de pression d'air (41) sont produites et la pression (40) est détectée et surveillée dans le tuyau interne (6).
